# EUROPEAN PATENT APPLICATION

(11) **EP 4 844 624 A1**
(43) Date of publication of application: **25.11.2026**
(21) Application number: 26178000.1
(22) Date of filing: 11.05.2026
(51) Int. Cl.: G06F 30/20, G06F 30/27, H01M 10/052, H01M 10/0525

(54) **METHOD AND SYSTEM OF COMPOSITE ELECTRODE DESIGN FOR ENHANCED BATTERY PERFORMANCE**

(30) Priority: 13.05.2025 IN 202521046085
(71) Applicant: Tata Consultancy Services Limited, Maharashtra (IN)
(72) Inventor: BHAT, Ishan, 500081 Hyderabad, Telangana (IN); SAHU, Susmit Kumar, 411057 Pune, Maharashtra (IN); DINGARI, Naga Neehar, 500081 Hyderabad, Telangana (IN); RAI, Beena, 15213 Pennsylvania (US)
(74) Representative: Goddar, Heinz J.

(57) **Abstract**

This disclosure relates generally to composite electrode designing through optimization of design variables for improved battery performance. state-of-the-art methods based on physics models for predicting battery performance involve design parameter optimization in a brute-force manner that are computationally expensive. The method of the present disclosure combines physics based modeling and an optimization algorithm to systematically derive optimal values of the design variables. This reduces the cost and time involved in experiments and narrows down the search space. The method involves evaluation of system-level performance attributes specified by user by utilizing the physics-based model parameters to compute the initial design variables. The method further involves iterative optimization of an objective function to obtain a set of final optimal design variables having an optimum values of the composite electrode parameters based on a desired battery performance.

## Description

### CROSS-REFERENCE TO RELATED APPLICATIONS AND PRIORITY

The present application claims priority to Indian application no. 202521046085, filed on May 13, 2025.

### TECHNICAL FIELD

The disclosure herein generally relates to composite electrode designing, and, more particularly, to a method and system for composite electrode designing through optimization of design variables.

### BACKGROUND

Current energy supply solutions fail to meet growing energy requirements, highlighting the need for more efficient battery alternatives. Improved energy density, safety and extended battery life are some of the key properties that need to be achieved in comparison to existing market solution. The choice of electrode materials and their composition determines the battery performance with respect to the above-mentioned attributes. The traditional way of choosing appropriate battery materials involves expensive and time-consuming experiments. Given the vast sample-space of battery materials, it is necessary to augment experiments with computational screening techniques. Current methods for designing composite electrode battery systems includes identifying optimal values of battery design variables such as electrode composition, particle size and thickness etc. Optimizing composite battery design variables involves using various parameters like material properties and geometric properties, to achieve desired performance characteristics, such as structural integrity, energy storage, and thermal management. Optimizing design variables in battery design aims to achieve specific performance goals like energy density, power delivery, and longevity by manipulating parameters like electrode thickness, porosity, and particle size, often using mathematical models and optimization algorithms. Some of the existing battery optimization techniques involves multi-physics modeling, sensitivity analysis, optimization algorithms, surrogate modeling, design of experiments (DOE).

To optimize composite battery design variables, researchers often rely on experimental techniques where the effect of composite electrode parameters on the battery performance is investigated. These existing techniques to evaluate the battery design variables, which are based on experiments involve a lot of trial-and-error. Even though system level physics based models are available that can provide high-fidelity predictions of battery performance, searching the design space of composite electrode parameters in a brute-force manner is computationally expensive.

### SUMMARY

Embodiments of the present disclosure present technological improvements as solutions to one or more of the above-mentioned technical problems recognized by the inventors in conventional systems. For example, in one embodiment, a method for designing composite electrode through optimization of design variables is provided. The method includes receiving, via one or more hardware processors (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters. The plurality of physics-based model parameters comprises (a) one or more transport properties of lithium (Li+) ion in one or more electrodes and one or more electrolytes, (b) one or more electrode degradation parameters, (c) one or more geometric parameters, (d) one or more electrode parameters and one or more electrolyte material parameters, and e) one or more battery operational parameters like upper cutoff voltage for charge cycle and lower cutoff voltage for discharge cycle, lower and upper limits for state-of-charge etc. The physics-based model parameters are derived through one of experimentation, simulation, and machine learning models. The set of design variables comprises one or more geometric parameters of the composite electrode, and one or more material parameters of the composite electrode. The one or more geometric parameters comprise (i) a radii of an individual particle of the electrode (*R*_{*p*1}, *R*_{*p*2}), (ii) volume fractions (V₁, V₂ ) of the individual particle in an active material, (iii) an electrode-thickness (Lₛ), and (iv) a total volume fraction of an active material in the composite electrode(εₛ), and wherein the one or more material parameters include a young's modulus, a Poisson's ratio, a partial molar volume, and a fracture toughness. The one or more optimization parameters comprises (i) a plurality of hyperparameters fine-tuned by an optimization module, and (b) one or more constraints comprising a tolerance value for the objective function, a lower bound, an upper bound, and one or more constraints for each design variable from the set of initial design variables. The method further includes performing, via one or more hardware processors, an analysis of a battery under one or more charging and discharging cycles by providing the set of initial design variables, and the plurality of physics-based model parameters to an electrochemical model to obtain one or more computed system-level performance attributes. The one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights wherein a magnitude to each weight is assigned by the user based on an importance the user-defined set of system-level performance attributes. The method further includes defining, via the one or more hardware processors, an objective function based on the one or more computed system-level performance attributes, wherein the objective function is a weighted sum of the one or more computed system-level performance attributes. The iterative optimization of the objective function maximizes the objective function based on the one or more optimization parameters to obtain the set of revised composite electrode parameters. The method further includes iteratively optimizing, via the one or more hardware processors, the objective function by providing the one or more optimization parameters, and the set of initial design variables to one or more optimization algorithms. During the iterative optimization of the objective function, a surrogate function and one or more additional intrinsic conditions are utilized at each iteration to compute a set of revised design variables. The method further includes labelling, via the one or more hardware processors, the set of revised design variables. The set of revised design variables are labelled as a set of final optimal design variables, if the set of revised design variables satisfy a pre-defined termination criterion. The set of revised design variables is labelled as a next set of initial design variables for a next iteration, if the set of revised design variables do not satisfy the pre-defined termination criterion. The set of final optimal design variables is a set of optimum values of one or more composite electrode parameters based on a desired battery performance. At each iteration, the pre-defined termination criterion is achieved if a root mean-squared difference between the one or more design variables in a successive iteration falls below a user-specified tolerance.

In another aspect, a system for designing composite electrode through optimization of design variables is provided. The system includes at least one memory storing programmed instructions, one or more Input/Output (I/O) interfaces, and one or more hardware processors, and a battery performance model 110 operatively coupled to a corresponding at least one memory. The system is configured to receive (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters. The plurality of physics-based model parameters comprises (a) one or more transport properties of lithium (Li+) ion in one or more electrodes and one or more electrolytes, (b) one or more electrode degradation parameters, (c) one or more geometric parameters, (d) one or more electrode parameters and one or more electrolyte material parameters, and e) one or more battery operational parameters like upper cutoff voltage for charge cycle and lower cutoff voltage for discharge cycle, lower and upper limits for state-of-charge etc. The Physics-based model parameters are derived through one of experimentation, simulation, and machine learning models. The set of initial design variables comprises one or more geometric parameters of the composite electrode, and one or more material parameters of the composite electrode. The one or more geometric parameters comprise (i) a radii of an individual particle of the electrode (Rₚ₁, Rₚ₂ ), (ii) volume fractions (V₁, V₂ ) of the individual particle in an active material, (iii) an electrode-thickness (Lₛ), and (iv) a total volume fraction of an active material in the composite electrode(εₛ), and wherein the one or more material parameters include a young's modulus, a Poisson's ratio, a partial molar volume, and a fracture toughness. The one or more optimization parameters comprises (i) a plurality of hyperparameters fine-tuned by an optimization module, and (b) one or more constraints comprising a tolerance value for the objective function, a lower bound, an upper bound, and one or more constraints for each design variable from the set of initial design variables. The system is configured to perform an analysis of a battery under one or more charging and discharging cycles by providing the set of initial design variables, and the plurality of physics-based model parameters to an electrochemical model to obtain one or more computed system-level performance attributes. The one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights wherein a magnitude to each weight is assigned by the user based on an importance the user-defined set of system-level performance attributes. The system is configured to define an objective function based on the one or more computed system-level performance attributes, wherein the objective function is a weighted sum of the one or more computed system-level performance attributes. The iterative optimization of the objective function maximizes the objective function based on the one or more optimization parameters to obtain the set of revised composite electrode parameters. The system is configured to iteratively optimize the objective function by providing the one or more optimization parameters, and the set of initial design variables to one or more optimization algorithms. During the iterative optimization of the objective function, a surrogate function and one or more additional intrinsic conditions are utilized at each iteration to compute a set of revised design variables. The system is configured to label the set of revised design variables. The set of revised design variables are labelled as a set of final optimal design variables, if the set of revised design variables satisfy a pre-defined termination criterion. The set of revised design variables is labelled as a next set of initial design variables for a next iteration, if the set of revised design variables do not satisfy the pre-defined termination criterion. The set of final optimal design variables is a set of optimum values of one or more composite electrode parameters based on a desired battery performance. At each iteration, the pre-defined termination criterion is achieved if a root mean-squared difference between the one or more design variables in a successive iteration falls below a user-specified tolerance.

In yet another aspect, a computer program product including a non-transitory computer-readable medium embodied therein for designing composite electrode through optimization of design variables is provided. The computer readable program, when executed on a computing device, causes the computing device to receive (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters. The plurality of physics-based model parameters comprises (a) one or more transport properties of lithium (Li⁺) ion in one or more electrodes and one or more electrolytes, (b) one or more electrode degradation parameters, (c) one or more geometric parameters, (d) one or more electrode parameters and one or more electrolyte material parameters, and e) one or more battery operational parameters like upper cutoff voltage for charge cycle and lower cutoff voltage for discharge cycle, lower and upper limits for state-of-charge etc. The physics-based model parameters are derived through one of experimentation, simulation, and machine learning models. The set of initial design variables comprises one or more geometric parameters of the composite electrode, and one or more material parameters of the composite electrode. The one or more geometric parameters comprise (i) a radii of an individual particle of the electrode (Rₚ₁, Rₚ₂ ), (ii) volume fractions (V₁, V₂ ) of the individual particle in an active material, (iii) an electrode-thickness (Lₛ), and (iv) a total volume fraction of an active material in the composite electrode(εₛ), and wherein the one or more material parameters include a young's modulus, a Poisson's ratio, a partial molar volume, and a fracture toughness. The one or more optimization parameters comprises (i) a plurality of hyperparameters fine-tuned by an optimization module, and (b) one or more constraints comprising a tolerance value for the objective function, a lower bound, an upper bound, and one or more constraints for each design variable from the set of initial design variables. The computer readable program, when executed on a computing device, causes the computing device to perform an analysis of a battery under one or more charging and discharging cycles by providing the set of initial design variables, and the plurality of physics-based model parameters to an electrochemical model to obtain one or more computed system-level performance attributes. The one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights wherein a magnitude to each weight is assigned by the user based on an importance the user-defined set of system-level performance attributes. The computer readable program, when executed on a computing device, causes the computing device to define an objective function based on the one or more computed system-level performance attributes, wherein the objective function is a weighted sum of the one or more computed system-level performance attributes. The iterative optimization of the objective function maximizes the objective function based on the one or more optimization parameters to obtain the set of revised composite electrode parameters. The computer readable program, when executed on a computing device, causes the computing device to iteratively optimize the objective function by providing the one or more optimization parameters, and the set of initial design variables to one or more optimization algorithms. During the iterative optimization of the objective function, a surrogate function and one or more additional intrinsic conditions are utilized at each iteration to compute a set of revised design variables. The computer readable program, when executed on a computing device, causes the computing device to the set of revised design variables. The set of revised design variables are labelled as a set of final optimal design variables, if the set of revised design variables satisfy a pre-defined termination criterion. The set of revised design variables is labelled as a next set of initial design variables for a next iteration, if the set of revised design variables do not satisfy the pre-defined termination criterion. The set of final optimal design variables is a set of optimum values of one or more composite electrode parameters based on a desired battery performance. At each iteration, the pre-defined termination criterion is achieved if a root mean-squared difference between the one or more design variables in a successive iteration falls below a user-specified tolerance.

It is to be understood that both the foregoing general description and the following detailed description are exemplary and explanatory only and are not restrictive of the invention, as claimed.

### BRIEF DESCRIPTION OF DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for designing composite electrode through optimization of design variables, according to some embodiments of the present disclosure.
FIG. 2 shows components of a battery performance model elaborating flow of design variables optimization, according to some embodiments of the present disclosure.
FIGS. 3A and 3B are flow diagrams of an illustrative method for designing composite electrode through optimization of design variables, using the system of FIG. 1, according to some embodiments of the present disclosure.
FIG. 4A represents a percentage volume change of the silicon (Si) particle as a function of time (in hours) during discharge cycle with respect to volume fraction parameterization, according to some embodiments of the present disclosure.
FIG. 4B represents a terminal voltage of the battery as a function of time (in hours) during discharge cycle with respect to volume fraction parameterization, according to some embodiments of the present disclosure.
FIG. 5A shows a percentage volume change of the silicon (Si) particle as a function of time (in hours) during discharge cycle with respect to particle radius parameterization, according to some embodiments of the present disclosure.
FIG. 5B shows a terminal voltage of the battery as a function of time (in hours) during discharge cycle with respect to particle radius parameterization, according to some embodiments of the present disclosure.
FIG. 6A shows convergence plot of the optimization algorithm showing the value of the objective function as a function of the iteration number, according to some embodiments of the present disclosure.
FIGS. 6B through 6C shows the values of the functions E(x,y) and D(x,y) as functions of design variables x and y, according to some embodiments of the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

This disclosure relates generally to composite electrode designing through optimization of design variables for improved battery performance. The State-of-the-art methods based on physics models for predicting battery performance involve design parameter optimization in a brute-force manner that are computationally expensive. The method of the present disclosure combines Physics based modeling and an optimization algorithm to systematically derive optimal values of the design variables. This reduces the cost and time involved in experiments and narrows down the search space. The method involves evaluation of system-level performance attributes specified by user by utilizing the physics-based model parameters to compute the initial design variables. The method further involves iterative optimization of an objective function to obtain a set of final optimal design variables having an optimum values of the composite electrode parameters based on a desired battery performance.

The present disclosure describes a framework for designing the composite electrode battery of a lithium (Li) ion battery. A composite electrode typically consists of electrode particles of multiple materials (usually two) mixed in appropriate proportion. Traditional approaches for choosing the composite electrode design parameters such as volume fractions of the materials, particle radii, electrode width etc rely on experimental methods and involve a lot of trial and error.

The present disclosure provides a systematic way to explore the design space of composite electrode design parameters. It combines physics-based system level model with a black-box optimization algorithm. The physics-based system level model evaluates the battery performance for a given choice of the composite-electrode parameters. The Physics-based system level model is coupled with the optimization algorithm in such a manner that the latter comes up with the next best guess of the composite electrode parameters depending on the objective function estimated using the system level model. With this approach, the search-space of the composite electrode parameters is effectively navigated using the power of the black-box optimization algorithm techniques and the high-fidelity predictions of the Physics based system level model. This computational framework systematically derive the optimal values of the design variables for composite electrode batteries. The method involves the optimization algorithm in combination with a physics-based cell-level model to iteratively come up with improved estimates of the design variables subject to optimal system level battery performance. This reduces the cost and time involved in experiments and narrows down the search space which can be used to reduce the number of experiments needed.

As used herein, the term 'computed system-level performance attributes' refers to a set of battery performance attributes estimated using the system-level module.

As used herein, the term 'user-defined system-level performance attributes' refers to a set of battery performance attributes specified by the user that need to be considered in the objective function.

As used herein, the term 'design variables' refers to geometric and material properties of the composite electrode. Geometric properties include radius of the particle (of each component of composite electrode), volume fraction of each component of composite electrode, electrode thickness, etc. And material properties include Young's modulus, Poisson's ratio, partial molar volume etc.

As used herein, the term 'charging cycle' refers to a process of charging the battery once using a CC-CV (constant current-constant voltage) charging protocol.

As used herein, the term 'discharging cycle' refers to a process of discharging the battery once till the battery terminal voltage falls below a discharge-cutoff-voltage.

As used herein, the term 'set of initial design variables' refers to one or more plausible values of a plurality of design variables like geometric and material variables which are provided by the user to a computational model as an initial input which they think are the closest best values in their opinion.

As used herein, the term 'set of final optimal design variables' refers to a final output of the battery design framework comprising an optimal values of the one or more design variables of the composite electrode satisfying the terminal criterion.

As used herein, the term 'optimization parameter' refers to one or more parameters used by an optimization module, e.g., hyperparameters fine-tuned by the optimization module, tolerance value for the objective function, tolerance values for the design variables, bounds and constraints for each design variable.

As used herein, the term 'optimization algorithm' refers to a technique of finding optimal values of the design variables which optimize the objective function.

As used herein, the term 'surrogate function' refers to an approximate model such as Gaussian process, used to represent the complex, expensive objective function to make optimization faster, more efficient and feasible when direct evaluation is too expensive.

As used herein, the term 'additional intrinsic condition' refers to extra conditions which are there in the system by its nature such as conditions like sum of all volume fractions of a composite system should add up to unity, etc.

As used herein, the term 'pre-defined termination criterion' refers to a value provided by the user as a part of the optimization parameters when the root mean-squared difference between the design variables in a successive iteration falls below the tolerance value (specified in the user-defined optimization parameters).

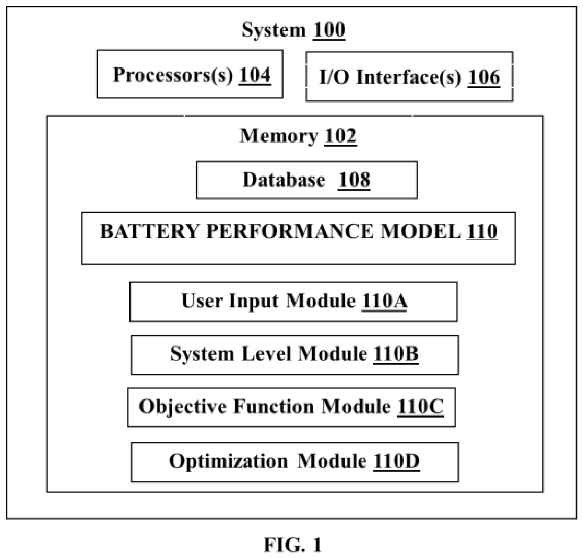

Referring now to the drawings, and more particularly to FIG. 1 through FIG. 6C, where similar reference characters denote corresponding features consistently throughout the figures, there are shown preferred embodiments, and these embodiments are described in the context of the following exemplary system and/or method.

FIG. 1 illustrates an exemplary block diagram of a system 100 for designing composite electrode through optimization of design variables, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102.

In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like.

In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 102 includes battery performance model 110. The battery performance model 110 comprises of a user input module 110A, a system level module 110B, an objective function module 110C, and an optimization module 110D.

The battery performance model 110 performs optimization of one or more design variables of the composite electrode. The battery performance model 110 receives one or more system-level performance attributes as an input from a user. The battery performance model 110 further considers a plurality of physics-based model parameters, a set of initial design variables, and one or more optimization parameters. The battery performance model 110 performs an analysis of a battery under one or more charging and discharging cycles by utilizing the inputs to obtain one or more computed system-level performance attributes. The one or more computed system-level performance attributes are utilized to define an objective function. The objective function is a weighted sum of the one or more computed system-level performance attributes. The battery performance model 110 performs iterative optimization of the objective function to compute a set of revised design variables. The a set of revised design variables are scanned against a pre-defined termination criterion to qualify as a set of final optimal design variables. The set of final optimal design variables is a set of optimum values of the composite electrode parameters based on a desired battery performance.

The user input module 110A receives a user-defined set of system-level performance attributes and their corresponding weights. The set of system-level performance attributes comprises one or more properties of battery materials, and one or more initial design variables. These system level performance attributes are user defined and formed using the weighted sum of these performances whose magnitude is based on the importance of set by the user. These attributes includes (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components. The system level module 110B evaluates the set comprising one or more system-level performance attributes specified by a user. The system level module 110B utilizes one or more physics-based model parameters and one or more initial design variables to evaluate the one or more system-level performance attributes. The system-level model uses physics-based modelling approach to simulate the Li+ transport and electrochemical processes occurring within the battery during charging/discharging. Commonly used physics-based modelling approaches for batteries include the Doyle-Fuller-Newman (DFN) model or a simplified version of it such as the single particle model (with/without electrolyte dynamics), with modifications to consider diffusion-induced stresses, particle mechanics and thermal behavior. Based on the Li+ concentration and electric potentials in various components of the battery, various system-level attributes such as volumetric expansion, mechanical stresses, energy density, etc are evaluated. The objective function module 110C formulates an objective function using the set of system-level performance attributes and passes it to the following module along with the constraints on composite-electrode parameters. The weights assigned to the system-level performance attributes by the user as input are used as coefficients for those system-level attributes in the objective function. The weights for the system-level performance attributes which need to be maximized are positive and for the ones which need to be minimized are negative. The absolute value of the weights also tell about the preference to those system-level performance attributes required by the user. When passed to the optimization module, the objective function is maximized to get the one or more optimal values of the design space variables. The optimization module 110D finds the one or more the optimal values of the composite electrode parameters (i.e. design-space) iteratively using the system level module 110B until an optimal criterion is reached. The final values are used as one or more optimized composite-electrode parameters. An approximate model such as Gaussian process, is used to represent the complex, expensive real objective function to make optimization faster, more efficient and feasible when direct evaluation is too expensive. Taking the optimization parameters from the module 110A and the objective function from module 110C, the output of the optimization module are used as input for the system level module 110B until the pre-defined termination criterion (i.e., until the root mean-squared difference between the one or more design variables in a successive iteration falls below that tolerance value) is reached.

The memory 102 further comprises of a plurality of modules that includes programs or coded instructions that supplement applications or functions performed by the system 100 for executing different steps involved in the micro-batch processing, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

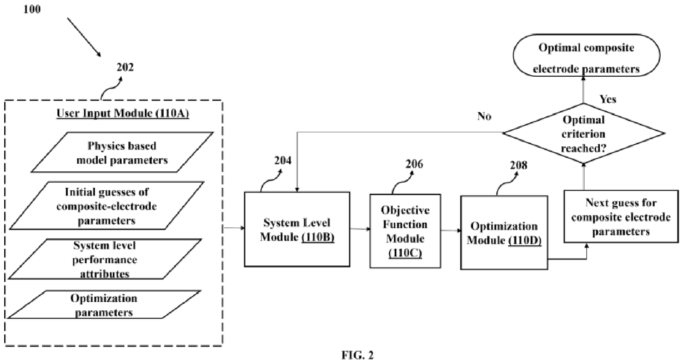

FIG. 2 shows components of the battery performance model 110 elaborating flow of design variables optimization, according to some embodiments of the present disclosure.

As illustrated in the FIG. 2, optimization of the one or more design variables involves at least one user and a battery performance model 110.

The battery performance model 110 comprises the user input module 110A, the system level module 110B, the objective function module 110C, and the optimization module 110D. At 202, the user input module 110A, via the one or more hardware processors 104, receives a plurality of physics-based model parameters, a set of initial design variables, a user-defined set of system-level performance attributes along with corresponding weights to each system-level performance attribute from the user-defined set of system-level performance attributes, and one or more optimization parameters.

The plurality of physics-based model parameters includes one or more properties of the battery materials (electrodes, electrolytes), one or more intercalation reaction and side reaction parameters, one or more thermal parameters and other degradation parameters. The set of initial design variables includes radii of the individual particles of the composite electrode (*Rp*₁, *Rp*₂))*,* their volume fractions (V₁, *V*₂) (, electrode-width (*Lₛ*) , total volume fraction of the active material in the electrode(s). The user-defined set of system-level performance attributes includes volume expansion (to be minimized), intercalation stresses (to be minimized) and energy density (to be maximized), which need to be considered while formulating the objective function.

At 204, the system level module 110B, via the one or more hardware processors 104, performs an analysis of a battery under one or more charging and discharging cycles by providing the set of initial design variables, and the plurality of physics-based model parameters to an electrochemical model. The system level module 110B computes one or more computed system-level performance attributes. The system-level model uses physics-based modelling approach to simulate the Li+ transport and electrochemical processes occurring within the battery during charging/discharging. Commonly used physics-based modelling approaches for batteries include the Doyle-Fuller-Newman (DFN) model or a simplified version of it such as the single particle model (with/without electrolyte dynamics), with modifications to consider diffusion-induced stresses, particle mechanics and thermal behavior. Based on the Li+ concentration and electric potentials in various components of the battery, various system-level attributes such as volumetric expansion, mechanical stresses, energy density, etc. can be evaluated. The computed system-level performance attributes differ from the user-defined of system-level performance attributes. The computed system-level attributes refer to the values of the attributes obtained from the system-level module, whereas the user-defined attributes refer to the list of system-level attributes to be used to formulate the objective function.

At 206, an objective function is defined on the basis of the one or more computed system-level performance attributes. The computed system-level performance attributes are used to formulate the objective function using the objective function module 110C. Depending on whether the user specifies the objective function choice in the optimization parameters (user input module) as a single objective function (with appropriate weights) or multi-objective function, an appropriate objective function is formulated. The objective function, along with the constraints, tolerance value, lower bound and upper bound specified on each design space variable for composite-electrode parameters are passed to the optimization module 110D. At 208, the optimization module 110D, via the one or more hardware processors 104, iteratively processes the objective function by utilizing one or more optimization algorithms to find the optimal values of the design space variable for composite-electrode parameters and arrives at a next set of initial design variables for a next iteration using a black-box optimization technique such as Bayesian optimization or particle swarm optimization etc. The iterative optimization of the objective function by providing the one or more optimization parameters, and initial design variables to one or more optimization algorithms. In the optimization algorithm, a surrogate function and one or more additional intrinsic conditions are utilized to compute a set of revised design variables. The appropriate choice of the optimization algorithm along with other algorithm-related parameters are specified by the user in the user-input module 110A. A pre-defined termination criterion is specified by the user in terms of incremental change in the one or more revised design variables between successive optimization iterations or number of optimization iterations or both. In case the pre-defined termination criterion is reached, the composite-electrode parameters obtained are used as optimal values and if not, they are used as inputs for the system level model for the next iteration of the optimization algorithm. This loop continues until the optimal criterion is met. The one or more revised design variables are labelled as a set of final optimal design variables, if the revised design variables satisfy a pre-defined termination criterion. The one or more revised design variables are labelled as a next set of initial design variables for a next iteration, if the revised design variables does not satisfy a pre-defined termination criterion. The set of final optimal design variables is a set of optimum values of the composite electrode parameters based on a desired battery performance.

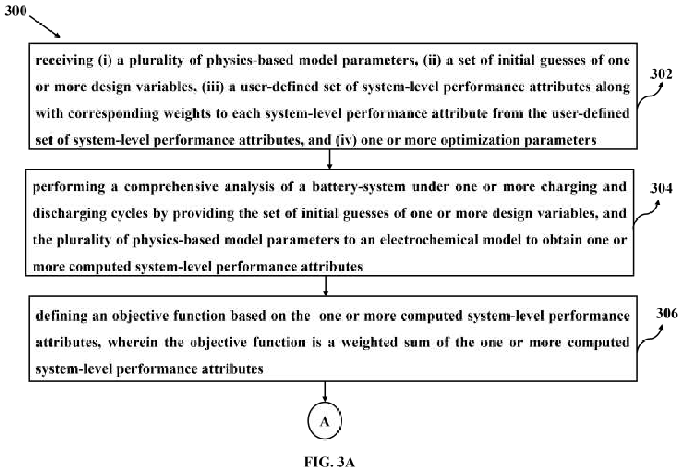

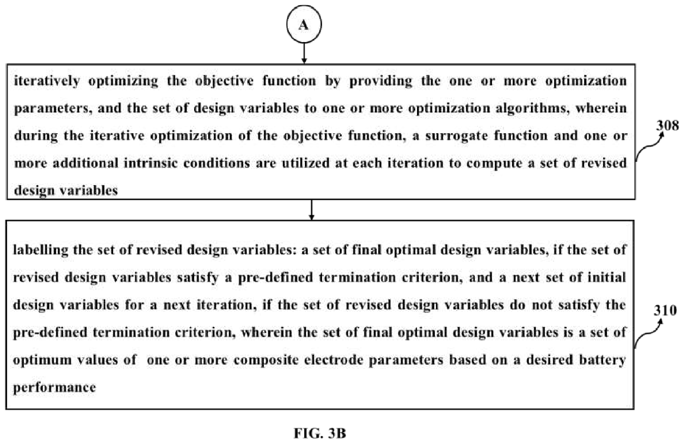

FIGS. 3A, 3B and 3C are flow diagrams of an illustrative method 300 for designing composite electrode through optimization of design variables, using the system of FIG. 1, according to some embodiments of the present disclosure.

The steps of the method 300 of the present disclosure will now be explained with reference to the components or blocks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically. Further, some steps may be performed simultaneously.

At step 302 of the method 300, the one or more hardware processors 104 are configured to receive (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters.

The plurality of physics-based model parameters comprises (a) one or more transport properties of lithium (Li+) ion in one or more electrodes and one or more electrolytes, (b) one or more electrode degradation parameters, (c) one or more geometric parameters, and (d) one or more electrode parameters and one or more electrolyte material parameters, wherein the physics-based model parameters are derived through one of experimentation, simulation, and machine learning models (a) transport properties of Lithium ion (Li+) in electrodes (diffusivity and conductivity) and electrolytes (diffusivity, ionic conductivity and transference number), (b) parameters related to the considered degradation such as partial molar volume, young's modulus, poison's ratio for intercalation stresses and volumetric expansion, loss of active material due to Solid Electrolyte Interphase (SEI) layers or Li plating or other side reactions for the various electrode-electrolyte combinations in the composite electrode, and (c) geometric parameters which are not part of the search space including electrode width, porosity of the electrode and electrolyte phases. These parameters are either (i) experimentally determined, or (ii) estimated using lower-length scale simulations such as Molecular dynamics or density functional theory, or (iii) using data-driven material informatics methods such as machine/deep learning models. The set of initial design variables include one or more geometric parameters of the composite electrode, and one or more material parameters of the composite electrode. These parameters are typically based on prior studies. For example, the radius is typically in the micrometer range, thickness typically in range 1-100 micrometer, individual volume fraction of particles should be lesser than 1 and their sum should add up to 1, etc. These parameters are set to design the composite-electrode battery systems (design space variables). The one or more geometric parameters comprise (i) a radii of an individual particle of the electrode Rₚ₂ ), (ii) volume fractions (V₁, V₂ ) of the individual particle in an active material, (iii) an electrode-thickness (Lₛ), and (iv) a total volume fraction of an active material in the composite electrode(εₛ). The one or more material parameters include a young's modulus, a poisson's ratio, a partial molar volume, and a fracture toughness. The user-defined set of system-level performance attributes are used to perform a comprehensive analysis of the battery system under both charging and discharging conditions. The user-defined set of system-level performance attributes govern the overall performance metrics (such as energy density and specific capacity) by considering various types of degradation (such as intercalation stresses, volumetric expansion, loss of active material due to SEI layer or Li plating or other side reactions and temperature rise). This analysis includes input weights of the objective function where both performance parameter and degradation parameters are considered. The user-defined set of system-level performance attributes includes (1) volumetric expansions of each of the components of the composite electrode, (2) maximum intercalation stresses occurring within each of the components of the composite electrode, (3) total loss of active material for each of the components, (4) maximum temperature within the battery during its operation, (5) energy density of the battery, and (6) specific capacity of the battery, (7) particle crack-length within the individual electrode components. Corresponding weights for each of these metrics are set by user, for example '0' for excluding the attributes, higher magnitude value for important attributes, lower higher magnitude value for lesser important attributes. The sign of the weights is chosen based on whether the user-defined set of system-level performance attributes are to be minimized or maximized. The one or more optimization parameters include (i) hyperparameters which are fine-tuned by the optimization module itself, and (ii) constraints, such as tolerance values for the objective function and the lower and upper bounds for the design space variables.

At step 304 of the method 300, the one or more hardware processors 104 are configured to perform an analysis of a battery under one or more charging and discharging cycles by providing the set of initial design variables, and the plurality of physics-based model parameters to an electrochemical model to obtain one or more computed system-level performance attributes. The comprehensive analysis of the battery-system under the one or more charging cycles and one or more discharging cycles involve simulation of one or more components of the battery-system. It includes (i) chemical transport where mass transport in both solid and electrolyte phases (species conservation equations) are considered, (ii) electrochemical kinetics where surface reaction at an electrode-electrolyte interface (Butler-Volmer reaction kinetics equation) is considered, (iii) electric charge where charge in both the electrolyte and the solid phase (charge conservation equations) is considered, and (iv) mechanics where induced stress, volumetric expansion and particle crack are considered due to the movement of ions, thermal effects, loss of active material due to SEI growth or Li plating or side reactions (using stress-strain relationship, heat transfer equations, and models for electrolyte decomposition such as the Arrhenius equation for reaction rates etc.) is considered. These processes are coupled together to create a more accurate model of composite-electrode battery by way of computing the one or more computed system-level performance attributes. The one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights wherein a magnitude to each weight is assigned by the user based on an importance the user-defined set of system-level performance attributes.

At step 306 of the method 300, the one or more hardware processors 104 are configured to define an objective function based on the one or more computed system-level performance attributes. The objective function is a weighted sum of the one or more computed system-level performance attributes. The comprehensive analysis of the battery-system defines an objective function based on one or more losses and a performance at the system level of the battery. The objective function module 110C receives the weighted sum of the one or more computed system-level performance attributes. This contains an expression related to one or more degradation losses occurring inside the Li+ battery and the cell performance. The objective function with their weights (*wᵢ*) is defined in equation (1) as: $L = {w}_{1} {f}_{VE} + {w}_{2} {f}_{IS} + {w}_{3} {f}_{LAM} + {w}_{4} {f}_{TR} + {w}_{5} {f}_{PC} + {w}_{6} {f}_{ED} + {w}_{7} {f}_{SC}$ (1)

The objective function module 110C evaluates the objective function value by considering different attributes which are required to be minimized (like volume expansion *f_{VE},* loss of active material *f_{LAM},* temperature rise *f_{TR}* and intercalation stresses *f_{IS}* ) and therefore, these will have negative weights. The attributes which need to be maximized (like energy density *f_{ED}* and specific capacity *f_{SC}*) will have positive weights. The overall objective function needs to be maximized.

At step 308 of the method 300, the one or more hardware processors 104 are configured to iteratively optimize the objective function by providing the one or more optimization parameters, and the set of initial design variables to one or more optimization algorithms. The one or more optimization parameters include (i) a plurality of hyperparameters fine-tuned by an optimization module, and (b) one or more constraints comprising a tolerance value for the objective function, a lower bound, an upper bound, and one or more constraints for each design variable from the set of initial design variables. During the iterative optimization of the objective function, a surrogate function and one or more additional intrinsic conditions are utilized at each iteration to compute a set of revised design variables. The surrogate function as well as the additional intrinsic conditions are pre-defined in the composite electrode battery framework. The surrogate function is a simplified model used to approximate the computationally expensive objective function to find the optimal values of the design variables. Examples are Gaussian processes (GP), radial basis function (RBF) etc. The additional intrinsic conditions are the inherent conditions imposed on the design variables due to nature of the composite electrode. These are conditions like sum of volume fractions of a composite electrode should add up to unity and more conditions like these. The optimization module 110D considers the one or more optimization parameters and the set of initial design variables and computes the set of revised design variables.

At step 310 of the method 300, the one or more hardware processors 104 are configured to label the set of revised design variables either as (a) a set of final optimal design variables, if the set of revised design variables satisfy a pre-defined termination criterion, or (b) a next set of initial design variables for a next iteration, if the set of revised design variables do not satisfy the pre-defined termination criterion. The pre-defined termination criterion is a value provided by the user as a part of the optimization parameters when the root mean-squared difference between the design variables in a successive iteration falls below the tolerance value (specified in the user-defined optimization parameters).

The set of final optimal design variables is a set of optimum values of one or more composite electrode parameters based on a desired battery performance. The iterative optimization of the objective function maximizes the objective function based on the one or more optimization parameters to obtain the set of revised composite electrode parameters. At each iteration, the pre-defined termination criterion is evaluated. The pre-defined termination criterion is considered to be accomplished if a root mean-squared difference between the one or more design variables in a successive iteration falls below a user-specified tolerance. The next set of initial design variables becomes the input for further optimization in the next iteration. The pre-defined termination criterion is when the set of revised design variables achieves a finite value with the subsequent iterations and there is numerically no difference between an initial design variable, and revised design variables of the one or more design variables. In case the pre-defined termination criterion is reached, the set of revised design variables is labelled as the set of final optimal design variables.

### PERFORMANCE OPTIMIZATION BASED ON SYSTEM-LEVEL ATTRIBUTES (Parametrization study for Volume fraction)

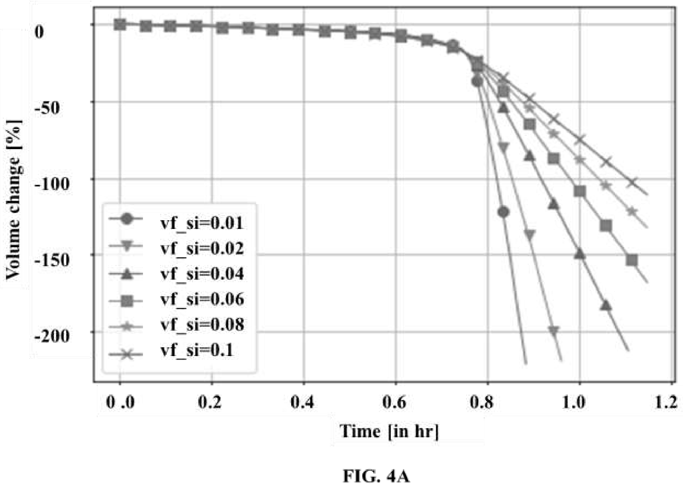

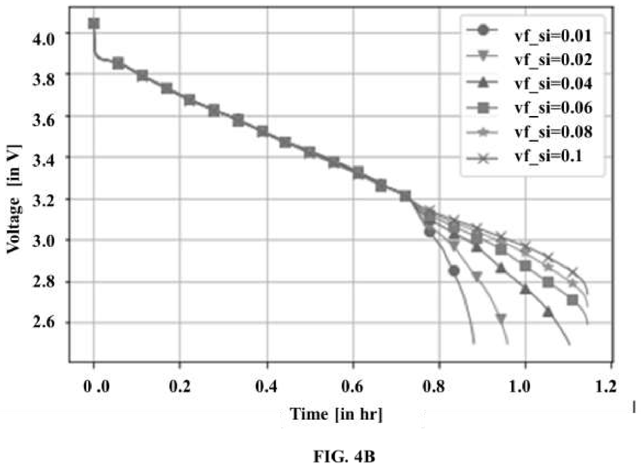

An illustration is given wherein system-level attributes are utilized to improve the battery performed through design variable optimization. The system-level module provides the one or more system-level performance attributes. FIG. 4A shows the system-level performance attribute: a volume expansion as a function of the volume fraction of silicon in the composite electrode (comprising of graphite and silicon) respectively, as obtained from the system-level module of the framework. It is observed from the FIG. 4A that the volume expansion increases with the increase in a volume fraction of silicon. So, if volume expansion is to be minimized, the volume fraction of silicon is to be kept smaller. However, as shown in FIG. 4B the smaller volume fraction of the silicone results in a smaller-discharge time (and hence smaller discharge capacity). This is not a desired property with respect to the composite electrode. Therefore, to maximize discharge capacity while keeping the volumetric expansion at the minimized level, an optimal value of silicon volume fraction is to be searched. This revised guess of the design variable assist in improving battery performance through iterative optimization.

### PERFORMANCE OPTIMIZATION BASED ON SYSTEM-LEVEL ATTRIBUTES (Parametrization study for Particle radius)

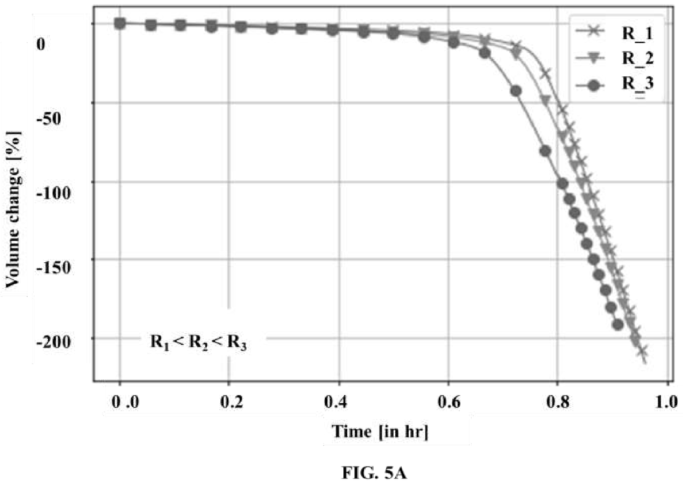

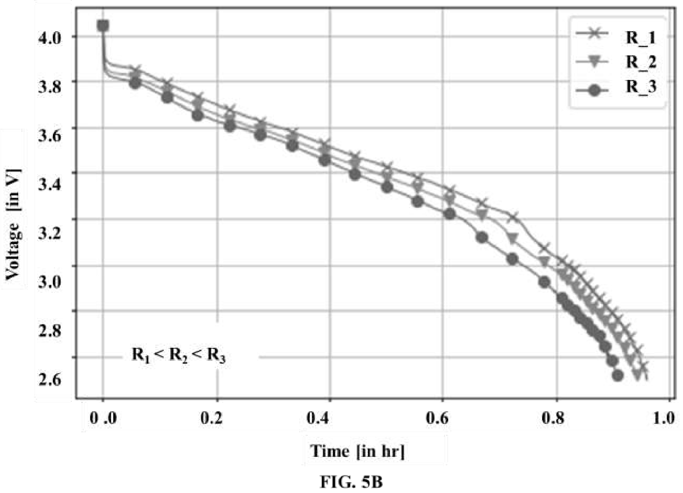

Similarly, FIG. 5A shows the system-level performance attribute: a volume expansion as a function of a radius of silicon and graphite in the composite electrode (which comprises of graphite and silicon) respectively, as obtained from the system-level module of the framework. It is observed from the FIG. 5A that the volume expansion increases with the increase in particle radius. This is straight equation. So, if volume expansion is to be minimized, one needs to have an optimized value for the set of particle radius for both graphite and silicon. However, as shown in FIG. 5B, a larger particle radius of Si and graphite results in smaller-discharge time (and hence smaller discharge capacity). This is not a desired property with respect to the composite electrode. Therefore, to maximize discharge capacity while keeping the volumetric expansion at the minimized level, an optimal value of particle radius of both silicon and graphite is to be searched. This revised guess of the design variable assist in improving battery performance through iterative optimization.

### CONVERGENCE OF THE OBJECTIVE FUNCTION BY THE OPTIMIZATION MODULE:

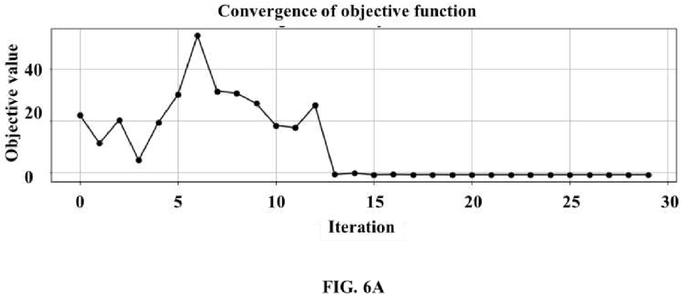

FIGS. 6A through 6C shows the functionality of the optimization algorithm. $Consider an objective function as : F \left(x, y\right) = {w}_{1} E \left(x, y\right) + {w}_{2} D \left(x, y\right)$ (2) Where, *E*(*x, y*) and *D*(*x, y*) are the system-level attributes

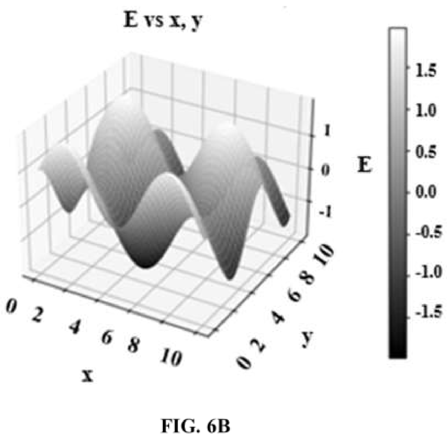

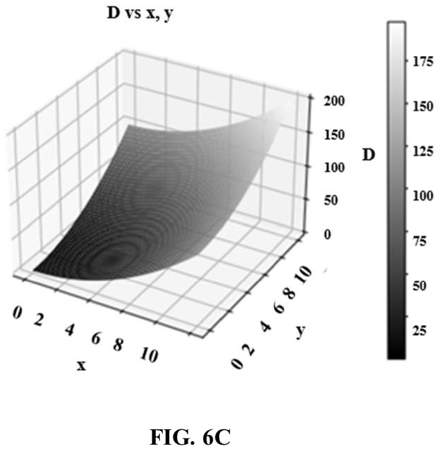

To demonstrate the functionality of the optimization algorithm, a closed-form expressions is assumed for *E*(*x, y*) and *D*(*x, y*) as : $E \left(x, y\right) = sin \left(x\right) + cos \left(y\right) and D \left(x, y\right) = {x}^{2} + {y}^{2}$ (3) The weights chosen for these attributes in the objective function are *w*₁ = 0.7 and *w*₂ = -0.3.
Since the goal is to maximize the objective function *F*(*x,y*) the signs are chosen for *w*₁ and *w*₂ so that *E*(*x, y*) gets maximized and *D*(*x, y*) Gets minimized. As shown in FIG. 6A, the optimization algorithm arrives at the optimal value after roughly 15 iterations. The resulting optimal values of the design variables *x, y* are *x* = 0.89 and *y* = -0.04. As depicted in FIGS. 6B and 6C the values of *E*(*x, y*) and *D(x, y)* are highly non-linear as a function *x, y.* Despite that, the optimization algorithm converges at the optimal values of the design variables. Therefore, the optimization algorithm effectively arrive at the optimal value of the design variable.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, the present disclosure employs a combined approach involving the method physics-based modeling and an optimization algorithm to systematically derive optimal values of the design variables. The physics-based system level model is coupled with the optimization algorithm in such a manner that the latter comes up with the next best guess of the composite electrode parameters depending on the objective function estimated using the system level model.

The method evaluates the one or more system-level performance attributes specified by the user by utilizing the physics-based model parameters to compute the initial design variables. The iterative optimization of the objective function lead to a set of final optimal design variables having an optimum values of the composite electrode parameters based on a desired battery performance.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) of designing a battery, the method comprising:
receiving (302), via one or more hardware processors, (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters;
performing (304), via the one or more hardware processors, an analysis of a battery under one or more charging and discharging cycles by providing the set of initial design variables, and the plurality of physics-based model parameters to an electrochemical model to obtain one or more computed system-level performance attributes;
defining (306), via the one or more hardware processors, an objective function based on the one or more computed system-level performance attributes, wherein the objective function is a weighted sum of the one or more computed system-level performance attributes;
iteratively optimizing (308), via the one or more hardware processors, the objective function by providing the one or more optimization parameters, and the set of initial design variables to one or more optimization algorithms, wherein during the iterative optimization of the objective function, a surrogate function and one or more additional intrinsic conditions are utilized at each iteration to compute a set of revised design variables; and
labelling (310), via the one or more hardware processors, the set of revised design variables as:
a set of final optimal design variables, if the set of revised design variables satisfy a pre-defined termination criterion, and
a next set of initial design variables for a next iteration, if the set of revised design variables do not satisfy the pre-defined termination criterion,
wherein the set of final optimal design variables is a set of optimum values of one or more composite electrode parameters based on a desired battery performance.

2. The method as claimed in claim 1, wherein the plurality of physics-based model parameters comprises (a) one or more transport properties of lithium (Li+) ion in one or more electrodes and one or more electrolytes, (b) one or more electrode degradation parameters, (c) one or more geometric parameters, and (d) one or more electrode parameters and one or more electrolyte material parameters, and wherein the physics-based model parameters are derived through experimentation, simulation, and machine learning models.

3. The method as claimed in claim 1, wherein the set of initial design variables include one or more geometric parameters of the composite electrode, and one or more material parameters of the composite electrode,
wherein the one or more geometric parameters comprise (i) a radii of an individual particle of the electrode Rₚ₂ ), (ii) volume fractions (V₁, V₂ ) of the individual particle in an active material, (iii) an electrode-thickness (Lₛ), and (iv) a total volume fraction of an active material in the composite electrode(εₛ), and
wherein the one or more material parameters include a young's modulus, a Poisson's ratio, a partial molar volume, and a fracture toughness.

4. The method as claimed in claim 1, wherein the one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights, and wherein a magnitude to each weight is assigned by a user based on an importance the user-defined set of system-level performance attributes.

5. The method as claimed in claim 1, wherein the one or more optimization parameters include (i) a plurality of hyperparameters fine-tuned by an optimization module, and (b) one or more constraints comprising a tolerance value for the objective function, a lower bound, an upper bound, and one or more constraints for each design variable from the set of initial design variables.

6. The method as claimed in claim 1, wherein at each iteration, the pre-defined termination criterion is achieved if a root mean-squared difference between one or more design variables from the set of initial design variables in a successive iteration falls below a user-specified tolerance.

7. The method as claimed in claim 1, wherein an iterative optimization of the objective function maximizes the objective function based on the one or more optimization parameters to obtain the set of revised composite electrode parameters.

8. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters;
perform an analysis of a battery under one or more charging and discharging cycles by providing the set of initial design variables, and the plurality of physics-based model parameters to an electrochemical model to obtain one or more computed system-level performance attributes;
define an objective function based on the one or more computed system-level performance attributes, wherein the objective function is a weighted sum of the one or more computed system-level performance attributes;
iteratively optimize the objective function by providing the one or more optimization parameters, and the set of initial design variables to one or more optimization algorithms, wherein during the iterative optimization of the objective function, a surrogate function and one or more additional intrinsic conditions are utilized at each iteration to compute a set of revised design variables; and
label the set of revised design variables:
a set of final optimal design variables, if the set of revised design variables satisfy a pre-defined termination criterion, and
a next set of initial design variables for a next iteration, if the set of revised design variables do not satisfy the pre-defined termination criterion,
wherein the set of final optimal design variables is a set of optimum values of one or more composite electrode parameters based on a desired battery performance.

9. The system as claimed in claim 8, wherein the plurality of physics-based model parameters comprises (a) one or more transport properties of lithium (Li+) ion in one or more electrodes and one or more electrolytes, (b) one or more electrode degradation parameters, (c) one or more geometric parameters, and (d) one or more electrode parameters and one or more electrolyte material parameters, and wherein the physics-based model parameters are derived through experimentation, simulation, and machine learning models.

10. The system as claimed in claim 8, wherein the set of initial design variables include one or more geometric parameters of the composite electrode, and one or more material parameters of the composite electrode,
wherein the one or more geometric parameters comprise (i) a radii of an individual particle of the electrode Rₚ₂ ), (ii) volume fractions (V₁, V₂ ) of the individual particle in an active material, (iii) an electrode-thickness (Lₛ), and (iv) a total volume fraction of an active material in the composite electrode(εₛ), and
wherein the one or more material parameters include a young's modulus, a Poisson's ratio, a partial molar volume, and a fracture toughness.

11. The system as claimed in claim 8, wherein the one or more computed system-level performance attributes, to be considered while defining the objective function, comprises (a) one or more volumetric expansions of each component of the composite electrode, (b) one or more intercalation stresses occurring within each component of the composite electrode, (c) a total loss of the active material for each composite electrode, (d) a temperature within the battery during its operation, (e) an energy density of the battery, (f) a specific capacity of the battery, and (g) a particle crack-length between one or more individual composite electrode components along with their corresponding weights, and wherein a magnitude to each weight is assigned by a user based on an importance the user-defined set of system-level performance attributes.

12. The system as claimed in claim 8, wherein the one or more optimization parameters include (i) a plurality of hyperparameters fine-tuned by an optimization module, and (b) one or more constraints comprising a tolerance value for the objective function, a lower bound, an upper bound, and one or more constraints for each design variable from the set of initial design variables.

13. The system as claimed in claim 8, wherein at each iteration, the pre-defined termination criterion is achieved if a root mean-squared difference between one or more design variables from the set of initial design variables in a successive iteration falls below a user-specified tolerance.

14. The system as claimed in claim 8, wherein an iterative optimization of the objective function maximizes the objective function based on the one or more optimization parameters to obtain the set of revised composite electrode parameters.

15. One or more non-transitory machine-readable information storage mediums comprising one or more instructions which when executed by one or more hardware processors cause:
receiving (i) a plurality of physics-based model parameters, (ii) a set of initial design variables, (iii) a user-defined set of system-level performance attributes along with corresponding weights to each system-level performance attribute from the user-defined set of system-level performance attributes, and (iv) one or more optimization parameters;
performing an analysis of a battery under one or more charging and discharging cycles by providing the set of initial design variables, and the plurality of physics-based model parameters to an electrochemical model to obtain one or more computed system-level performance attributes;
defining an objective function based on the one or more computed system-level performance attributes, wherein the objective function is a weighted sum of the one or more computed system-level performance attributes;
iteratively optimizing the objective function by providing the one or more optimization parameters, and the set of initial design variables to one or more optimization algorithms, wherein during the iterative optimization of the objective function, a surrogate function and one or more additional intrinsic conditions are utilized at each iteration to compute a set of revised design variables; and
labelling the set of revised design variables as:
a set of final optimal design variables, if the set of revised design variables satisfy a pre-defined termination criterion, and
a next set of initial design variables for a next iteration, if the set of revised design variables do not satisfy the pre-defined termination criterion,
wherein the set of final optimal design variables is a set of optimum values of one or more composite electrode parameters based on a desired battery performance.
